# EUROPEAN PATENT SPECIFICATION

(11) **EP 2 492 563 B1**
(45) Date of publication and mention of the grant of the patent: **18.12.2013**
(21) Application number: 11155979.5
(22) Date of filing: 25.02.2011
(51) Int. Cl.: F16L 3/10, H02G 3/22

(54) **Clamp for a pipe or cable.**
Klemme für Leitung oder Kabel
Pince pour tuyau ou câble

(43) Date of publication of application: 29.08.2012
(73) Proprietor: Raywal Holding SAS, 8030 Grenoble Cedex 2 (FR)
(72) Inventor: van Walraven, Jan, 3641 GP Mijdrecht (NL); Juzak, Marek, 3641 ZS Mijdrecht (NL)
(74) Representative: Houben, Christiaan Hein Willem Frans

(56) References cited:
- EP-A1- 0 353 539
- EP-A2- 1 489 712
- CH-A- 506 739
- DE-U1- 9 409 981
- FR-A1- 2 354 652
- GB-A- 2 322 484
- US-A- 3 633 248
- US-A- 5 243 139

## Description

The present invention relates to a pipe or cable clamp for a pipe or cable(s) according to the preamble of claim 1.

A clamp of this type is known from DE 19 09 284. In Fig. 1 of DE 19 09 284 a push-fit clamp is shown which comprises a base with an integrally formed dowel. The base can be attached to a support structure by means of a screw. The base constitutes a seat for the pipe or cable to be attached to the support structure. The clamp furthermore comprises a separate strap, which can be placed on the base and can be interconnected therewith. The strap is generally U-shaped with two parallel legs interconnected by a clamp portion that in use engages the pipe or cable. The base has on its lateral sides outwardly extending teeth. The legs of the strap have inwardly extending teeth that can cooperate with the teeth on the respective lateral sides of the base to interlock the strap with the base. In use a pipe or cable is placed on the seat of the base, after which the strap can be placed over the pipe or cable. The strap is pushed down such that the teeth on the legs slide along the teeth on the base in a ratchet-like manner. The strap is pushed down until the clamping portion of the strap engages the pipe or cable. The teeth keep the base and the strap interlocked.

Another clamp of this type is disclosed in EP 0 353 539. This known cable clamp has a base and a strap that are interconnected by a connection strip, which extends between the side wall of the strap and the side wall of the base. The connection strip constitutes a permanent connection between the base and the strap, both in an assembled and a preassembled state.

Other cable or wire clamps comprising a base and a clamping strap which may be interconnected by ratchet-like teeth structures are known from US-5243139, DE-GM-9409981 and GB-2322484. All these clamps have a strip-like loop that interconnects the base and the strap.

The present invention has for an object to provide an improved pipe or cable clamp.

This object is achieved by a clamp according to claim 1.

The clamp according to the invention has the advantage that the base and the strap of the clamp are in one piece when the clamp is mounted. The fitter therefore does not need to grab for two separate parts and assemble them. Furthermore, the frangible connection constitutes a hinging connection. Thereby the strap can then be hinged around the connection between the legs and the base and closed around the pipe or cable. When the strap is subsequently pushed down, the frangible connection is ruptured such that the legs of the strap can move along the lateral sides of the base. Thus the clamp can be easily closed around the pipe or cable and then be tightened around the pipe or cable.

In a practical embodiment the strap is generally U-shaped with the two legs substantially parallel and interconnected by the clamp portion.

In a preferred embodiment of the clamp according to the invention, at least one of the lateral walls of the base is provided with at least one transversely extending lug, wherein the frangible connection is arranged between said lug and the leg. The lug allows a good positioning of the hinging point with respect to the lateral wall of the base, such that the legs in a pre-closed state are both parallel with the lateral walls of the base.

In a preferred embodiment the frangible connection is arranged at the end of the leg.

Preferably the lateral wall has two transversely extending lugs, between which the leg of the strap can be guided.

In a possible embodiment the base below the teeth in the base is provided with at least one recess for inserting a tool to allow releasing of the locking engagement between the teeth of the base and the strap. This allows that the strap and the base can be released when necessary.

In another possible embodiment, the legs of the strap are provided with a guiding rib extending in the longitudinal direction of the leg and the lateral walls of the base are provided with a complementary guiding groove, said guiding rib in the mounted state being received in the guiding groove, or, wherein the legs of the strap are provided with a guiding groove extending in the longitudinal direction of the leg and the lateral walls of the base are provided with a complementary guiding rib which in mounted state is received in the guiding groove. The guiding ribs and grooves assure a good translational movement when the strap is pushed towards the base to tighten the clamp around a pipe or cable.

Preferably, the rib or groove on the leg and the lateral wall is arranged in the middle seen in the axial direction of the pipe or cable, and wherein the teeth on the leg and the lateral wall are arranged on either side of the groove or rib.

In a preferred embodiment the base or the clamp portion of the strap has a concave engagement surface for engaging the pipe or cable, which has a constant radius of curvature. A pipe or cable with the same radius or a smaller radius can be received in the space provided by the concave engagement surface.

In a further preferred embodiment, the clamp portion of the strap or the base has a concave engagement surface for engaging the pipe or cable, which concave engagement portion has a top portion with a constant radius of curvature and two outer portions that join the top portion, which have a greater radius of curvature than the top portion.

In yet a further preferred embodiment, the radius of curvature of the outer portions of the engagement surface of the clamp portion or the base is substantially equal to the constant radius of curvature of the engagement surface of the base or clamp portion. This shape of the engagement surface of the clamp portion is advantageous to clamp pipes or cables of different diameters, the largest diameter being the double of the radius of curvature of the engagement surface of the base and the outer portions of the engagement surface of the clamp portion. A pipe or cable of the greatest diameter will be engaged by the clamp portion on two contact regions. Smaller pipes, especially the ones with a diameter corresponding to the double of the radius of curvature of the top portion of the engagement surface, or smaller, can be engaged by said top portion. This shape ensures that the smaller pipe diameters are centred in the top portion.

The pipes or cables may in a practical embodiment have an outer diameter in the range of 12 - 22 mm. Common diameters used for pipes in or cables in this range are 12, 15, 18 and 22 mm. An advantageous pitch between the teeth on the legs and the teeth on the lateral walls of the base is therefore about 1,5 mm.

The present invention will be elucidated in the following detailed description with reference to the drawing, in which:
Fig. 1 shows a view in perspective of a preferred embodiment of pipe or cable clamp according to the invention in an open state,
Fig. 2 shows a front view of the clamp of Fig. 1,
Fig. 3 shows an elevational view from above of the clamp of Fig. 1,
Fig. 4 shows a side elevational view of the clamp of Fig. 1,
Fig. 5 shows a front view of the clamp of Fig. 1 in closed state with a pipe with large diameter clamped in it, and
Fig. 6 shows a front view of the clamp of Fig. 1 in closed state with a pipe with a small diameter clamped in it.

In the following the term "pipe" or "pipe clamp" will be used. It must be understood that where "pipe" or "pipe clamp" is used, also "cable" or "cable clamp" is envisaged.

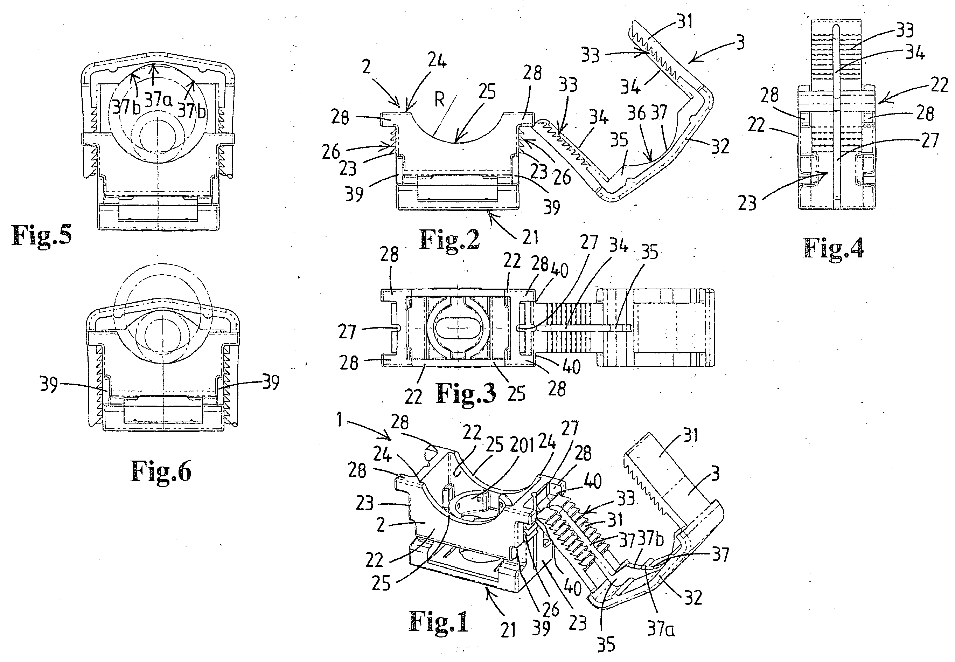

Fig. 1 shows a pipe clamp 1 comprising a base 2 and a strap 3. The pipe clamp 1 is manufactured from plastics material, preferably by means of an injection moulding process.

The base 2 is adapted to be mounted to a support structure such as a wall or ceiling. The base can also be mounted directly on a C-rail or other profiled section, or by means of a fastening element as is shown in EP 1470340. Also mounting on an adapter of the type similar to the one shown in EP 1229282 is possible. The base 2 has a bottom surface 21 in which a hole for a screw or other male fastening element is provided. There is also provided an essentially ring shaped feature 201 for inserting the end of a barrel of a nail gun. However, many ways are possible to fasten the base to a support structure, but the way the base 2 is fastened to a support structure is not essential for the present invention.

The base has two substantially parallel front walls 22, and two essential parallel lateral walls 23. The lateral walls 23 interconnect the front walls 22.

The front walls 22 have a top edge 24 which is provided with a recess providing a seat for a pipe. The recess is preferably curved and more preferably has a constant radius of curvature R. Thereby the top edge 24 of the wall 22 at the recess has a curved engagement surface 25.

The lateral walls 23 are provided with a toothing 26 with outwardly extending teeth. In the example in the drawing the toothing 26 has four teeth below each other, but this may also be another number. In the middle between the front walls 22 each of the lateral walls 23 is provided with a guiding groove 27 which extends from the top edge towards the bottom of the base 22. The groove 27 extends through the toothing 26 on the lateral wall 23.

At the top corners the base 22 is provided with lugs 28. The lugs 28 extend beyond the lateral walls 23 in the direction transverse thereto, preferably perpendicular thereto. The lugs 28 in between them define a space for the legs of the strap 3 as will be described below.

The strap 3 is in the specific embodiment shown substantially U-shaped and comprises two substantially parallel legs 31 which are interconnected by a clamp portion 32. The legs 31 have a region which is provided with toothing 33 of which the teeth extend inwardly such that the can cooperate with the teeth of the toothing 26 on the lateral walls 23 of the base 2 so as to interlock the base 2 and the strap 3 (see Figs 5 and 6). In the middle of the legs 31 is arranged a rib 34. The rib 34 extends over the length of the leg 31 and fits in the corresponding groove 27 in the lateral wall 23 of the base 2.

On the inside of the clamp portion 32 is also provided a rib 35. This rib 35 is provided with a recess 36. The recess 36 has a curved shape whereby a concave engagement portion 37 is provided for engaging the pipe. The engagement portion 37 has a top portion 37a with a constant radius of curvature and two outer portions 37b that join the top portion 37a, which have a greater radius of curvature than the top portion 37a.

In a practical but non-limiting example the radius of curvature of the top portion 37a may be 9 mm and the radius of curvature of the outer portions 37b may be 11 mm. The radius of curvature R of the seat in the base 2 is then preferably also 11 mm. In such a pipe clamp pipes with an outer diameter in a range of 12 - 22 mm may be camped.

One of the legs 31 is attached at its lower end to the outer end of the lugs 28 by a frangible connection 40. The frangible connection points 40 function as a hinge when the pipe clamp 1 is mounted and closed around a pipe. The base 2 and the strap 3 of the pipe clip 1 are manufactured in one piece, by injection moulding.

In use the base can be attached to a support structure after which a pipe or cable can be placed in the seat of the base 2. The clamp 1 has then the open state as is shown in Figs. 1-4. Then the fitter can swivel the strap around the hinging points 40 from the open state to a pre-closed state in which the strap 3 is positioned over the pipe with the clamp portion 32 extending over the pipe and the legs 31 of the strap extend substantially parallel to the lateral walls of the base 2. Then the strap 3 can be pushed downwardly, whereby the frangible connection at the points 40 is broken. Moving downwardly the teeth on the legs 31 of the strap 3 move along the teeth of the toothing 26 on the lateral walls of the base 2 like a ratchet. The strap 3 cannot be released by pulling the strap upwards, because the interlocking toothings 26 and 33 block the movement upwards.

The connection points 40 are located such that clamp is provided with a self-aligning feature of the strap 3 wherein the strap is easily swivelled to a closing position, in which the legs are aligned parallel with the laterals sides of the base. In the closing position the strap can be pushed downwards and tightened against the pipe. Advantageously the fitter does not have to take a separate strap or a strap that is connected to the base by a connection strip (cf. EP 353 539) and position the strap on the base.

In order to be able to release the strap 3 from the base 2 in the mounted state, the base is provided with a recess 39. The recess is provided just below the toothing 26 on the lateral wall of the base 2. A tool, for instance a screw driver tip can be inserted in the recess and can thereby engage the side of the leg on the inner side. Thus, by pushing the leg outwardly by means of the screw driver, the toothings 26 and 33 can be disengaged from each other and the strap 3 may be released from the base 2.

## Claims

1. Pipe or cable clamp (1) for attaching a pipe or a cable to a support structure, the clamp (1) comprising a base (2), which is to be mounted to the support structure, and a strap (3), wherein the pipe or cable can be clamped between the base (2) and the strap (3), wherein the strap (3) comprises two legs (31) interconnected by a clamp portion (32), the base (2) has lateral walls (23) being provided with outwardly extending teeth and the legs (31) of the strap (3) on their side facing inwards being provided with a series of inwardly extending teeth adapted for a locking engagement with the teeth of the base (2) to couple the strap (3) to the base (2), wherein said inwardly extending teeth and outwardly extending teeth are arranged such that during mounting, when the clamp portion (32) is pushed towards the base (2), the inwardly extending teeth on the legs (31) slide along the teeth on the base (2) in a ratchet-like manner, wherein in a pre-assembly state one of the legs (31) of the strap (3) is connected to the base (2) by a hinging connection (40) of the clamp, which hinging connection is frangible, whereby the strap (3) can be hinged around the connection (40) between the leg (31) and the base (2) and closed around the pipe or cable, and the strap (3) can subsequently be pushed down, **characterised in that** when the strap (3) is subsequently pushed down the frangible connection (40) is ruptured such that the legs (31) of the strap (3) can move along the lateral sides (23) of the base (2).

2. Clamp according to claim 1, wherein the strap (3) is generally U-shaped with the two legs (31) substantially parallel and interconnected by the clamp portion (32).

3. Clamp according to claim 1 or 2, wherein at least one of the lateral walls (23) of the base (2) is provided with at least one transversely extending lug (28), wherein the frangible connection (40) is arranged between said lug (28) and the leg (31).

4. Clamp according to claim 3, wherein the lateral wall (23) is provided with two lugs (28) extending laterally, the legs (31) being guided between the guiding lugs (28) during mounting.

5. Clamp according to any one of the preceding claims, wherein the frangible connection (40) is arranged at the end of the leg (31).

6. Clamp according to any one of the preceding claims, wherein the base (2) below the teeth in the base (2) is provided with at least one recess (39) for inserting a tool to allow releasing of the locking engagement between the teeth of the base (2) and the strap (3).

7. Clamp according to any one of the preceding claims, wherein the legs (31) of the strap (3) are provided with a guiding rib (34) extending in the longitudinal direction of the leg (31) and the lateral walls (23) of the base (2) are provided with a complementary guiding groove (27), said guiding rib (34) in the mounted state being received in the guiding groove (27), or, wherein the legs (31) of the strap (3) are provided with a guiding groove extending in the longitudinal direction of the leg (31) and the lateral walls (23) of the base (2) are provided with a complementary guiding rib which in mounted state is received in the guiding groove.

8. Clamp according to claim 7, wherein the rib (34) or groove (27) on the leg (31) and the lateral wall (23) is arranged in the middle seen in the axial direction of the pipe or cable, and wherein the teeth on the leg (31) and the lateral wall (23) are arranged on either side of the groove (27) or rib (34).

9. Clamp according to any one of the preceding claims, wherein the base (2) or the clamp portion (32) of the strap (3) has a concave engagement surface (25) for engaging the pipe or cable, which has a constant radius of curvature.

10. Clamp according to any one of the preceding claims, wherein the clamp portion (32) of the strap (3) or the base has a concave engagement surface (37) for engaging the pipe or cable, which concave engagement portion (37) has a top portion (37a) with a constant radius of curvature and two outer portions (37b) that join the top portion, which have a greater radius of curvature than the top portion (37a).

11. Clamp according to claims 9 and 10, wherein the radius of curvature of the outer portions (37b) of the engagement surface of the clamp portion or the base is substantially equal to the constant radius of curvature (R) of the engagement surface (25) of the base or clamp portion.

12. Clamp according to any one of the preceding claims wherein the teeth have a pitch of about 1,5 mm.

## Patentansprüche

1. Rohr- oder Kabelklemme (1) zum Befestigen eines Rohrs oder eines Kabels an einer Halterungsstruktur, wobei die Klemme (1) einen Sockel (2), der an der Halterungsstruktur anzubringen ist, und einen Bügel (3) umfasst, wobei das Rohr oder Kabel zwischen dem Sockel (2) und dem Bügel (3) eingespannt werden kann, wobei der Bügel (3) zwei Schenkel (31) aufweist, die durch einen Klemmenabschnitt (32) miteinander verbunden sind, der Sockel (2) Seitenwände (23) hat, die mit sich nach außen erstreckenden Zähnen versehen sind, und die Schenkel (31) des Bügels (3) auf ihrer nach innen gewandten Seite mit einer Reihe von sich nach innen erstreckenden Zähnen versehen sind, die zu einem verrastenden Eingriff mit den Zähnen des Sockels (2) angepasst sind, um den Bügel (3) mit dem Sockel (2) zu verbinden, wobei die sich nach innen erstreckenden Zähne und die sich nach außen erstreckenden Zähne so angeordnet sind, dass während der Montage, wenn der Klemmenabschnitt (32) zum Sockel (2) hin geschoben wird, die sich an den Schenkeln (31) nach innen erstreckenden Zähne ratschenartig entlang der Zähne am Sockel (2) gleiten, wobei in einem Vormontagezustand einer der Schenkel (31) des Bügels (3) durch eine drehgelenkige Verbindung (40) der Klemme mit dem Sockel (2) verbunden ist, welche drehgelenkige Verbindung zerbrechbar ist, wodurch der Bügel (3) um die Verbindung (40) zwischen dem Schenkel (31) und dem Sockel (2) geklappt und um das Rohr oder Kabel geschlossen werden kann, und der Bügel (3) anschließend nach unten gedrückt werden kann, **dadurch gekennzeichnet, dass,** wenn der Bügel (3) anschließend nach unten gedrückt wird, die zerbrechbare Verbindung (40) aufbricht, so dass sich die Schenkel (31) des Bügels (3) entlang der lateralen Seiten (23) des Sockels (2) bewegen können.

2. Klemme nach Anspruch 1, wobei der Bügel (3) allgemein U-förmig ist, wobei die zwei Schenkel (31) im Wesentlichen parallel und durch den Klemmenabschnitt (32) miteinander verbunden sind.

3. Klemme nach Anspruch 1 oder 2, wobei zumindest eine der Seitenwände (23) des Sockels (2) mit mindestens einem sich quer erstreckenden Ansatz (28) versehen ist, wobei die zerbrechbare Verbindung (40) zwischen dem Ansatz (28) und dem Schenkel (31) angeordnet ist.

4. Klemme nach Anspruch 3, wobei die Seitenwand (23) mit zwei sich seitlich erstreckenden Ansätzen (28) versehen ist, wobei die Schenkel (31) während der Montage zwischen den Führungsansätzen (28) geführt werden.

5. Klemme nach einem der vorhergehenden Ansprüche, wobei die zerbrechbare Verbindung (40) am Ende des Schenkels (31) angeordnet ist.

6. Klemme nach einem der vorhergehenden Ansprüche, wobei der Sockel (2) unter den Zähnen im Sockel (2) mit mindestens einer Ausnehmung (39) zum Einsetzen eines Werkzeugs versehen ist, um ein Lösen des verrastenden Eingriffs zwischen den Zähnen des Sockels (2) und des Bügels (3) zuzulassen.

7. Klemme nach einem der vorhergehenden Ansprüche, wobei die Schenkel (31) des Bügels (3) mit einer Führungsrippe (34) versehen sind, die in der Längsrichtung des Schenkels (31) verläuft, und die Seitenwände (23) des Sockels (2) mit einer komplementären Führungsrille (27) versehen sind, wobei die Führungsrippe (34) im montierten Zustand in der Führungsrille (27) aufgenommen ist, oder wobei die Schenkel (31) des Bügels (3) mit einer Führungsrille versehen sind, die in der Längsrichtung des Schenkels (31) verläuft, und die Seitenwände (23) des Sockels (2) mit einer komplementären Führungsrippe versehen sind, die im montierten Zustand in der Führungsrille aufgenommen ist.

8. Klemme nach Anspruch 7, wobei die Rippe (34) oder Rille (27) am Schenkel (31) und der Seitenwand (23) in der axialen Richtung des Rohrs oder Kabels gesehen in der Mitte angeordnet ist, und wobei die Zähne am Schenkel (31) und der Seitenwand (23) auf beiden Seiten der Rille (27) oder Rippe (34) angeordnet sind.

9. Klemme nach einem der vorhergehenden Ansprüche, wobei der Sockel (2) oder der Klemmenabschnitt (32) des Bügels (3) eine über einen konstanten Krümmungsradius verfügende konkave Eingriffsfläche (25) besitzt, um das Rohr oder Kabel in Eingriff zu nehmen.

10. Klemme nach einem der vorhergehenden Ansprüche, wobei der Klemmenabschnitt (32) des Bügels (3) oder des Sockels eine konkave Eingriffsfläche (37) besitzt, um das Rohr oder Kabel in Eingriff zu nehmen, welcher konkave Eingriffsabschnitt (37) über einen oberen Abschnitt (37a) mit einem konstanten Krümmungsradius und zwei sich an den oberen Abschnitt anschließende äußere Abschnitte (37b) verfügt, die einen größeren Krümmungsradius haben als der obere Abschnitt (37a).

11. Klemme nach den Ansprüchen 9 und 10, wobei der Krümmungsradius der äußeren Abschnitte (37b) der Eingriffsfläche des Klemmenabschnitts oder des Sockels im Wesentlichen dem konstanten Krümmungsradius (R) der Eingriffsfläche (25) des Sockels oder des Klemmenabschnitts gleicht.

12. Klemme nach einem der vorhergehenden Ansprüche, wobei die Zähne eine Teilung von ca. 1,5 mm haben.

## Revendications

1. Pince pour tuyau ou câble (1) permettant de fixer un tuyau ou un câble à une structure de support, la pince (1) comprenant une base (2), laquelle est destinée à être montée sur la structure de support, et une attache (3), dans lequel le tuyau ou le câble peut être pincé entre la base (2) et l'attache (3), dans lequel l'attache (3) comprend deux pattes (31) reliées entre elles par une partie de serrage (32), la base (2) comporte des parois latérales (23) qui sont pourvues de dents s'étendant vers l'extérieur et les pattes (31) de l'attache (3), sur leur côté tourné vers l'intérieur étant pourvues d'une série de dents s'étendant vers l'intérieur, adaptées pour un engagement ayant une action de verrouillage avec les dents de la base (2) pour coupler l'attache (3) à la base (2), dans lequel lesdites dents s'étendant vers l'intérieur et lesdites dents s'étendant vers l'extérieur sont agencées de telle sorte que lors du montage, lorsque la partie de serrage (32) est poussée vers la base (2), les dents s'étendant vers l'intérieur sur les pattes (31) coulissent le long des dents sur la base (2) à la manière de cliquets, dans lequel dans un état de pré-assemblage, une des pattes (31) de l'attache (3) est reliée à la base (2) au moyen d'une connexion d'articulation (40) de la pince, laquelle connexion d'articulation est cassable, moyennant quoi l'attache (3) peut être articulée autour de la connexion (40) entre la patte (31) et la base (2) et fermée autour du tuyau ou du câble, et l'attache (3) peut ensuite être poussée vers le bas, **caractérisé en ce que** lorsque l'attache (3) est ensuite poussée vers le bas, la connexion cassable (40) est rompue de telle sorte que les pattes (31) de l'attache (3) peuvent se déplacer le long des côtés latéraux (23) de la base (2).

2. Pince selon la revendication 1, dans lequel l'attache (3) est généralement en forme de U avec les deux pattes (31) sensiblement parallèles et reliées entre elles par la partie de serrage (32).

3. Pince selon la revendication 1 ou 2, dans lequel au moins l'une des parois latérales (23) de la base (2) est pourvue d'au moins un ergot (28) s'étendant transversalement, dans lequel la connexion cassable (40) est disposée entre ledit ergot (28) et la patte (31).

4. Pince selon la revendication 3, dans lequel la paroi latérale (23) est pourvue de deux ergots (28) s'étendant latéralement, les pattes (31) étant guidées entre les ergots de guidage (28) lors du montage.

5. Pince selon l'une quelconque des revendications précédentes, dans lequel la connexion cassable (40) est disposée à l'extrémité de la patte (31).

6. Pince selon l'une quelconque des revendications précédentes, dans lequel la base (2) au-dessous des dents dans la base (2) est pourvue d'au moins une encoche (39) pour l'insertion d'un outil pour permettre le déblocage de l'engagement ayant une action de verrouillage entre les dents de la base (2) et l'attache (3).

7. Pince selon l'une quelconque des revendications précédentes, dans lequel les pattes (31) de l'attache (3) sont pourvues d'une nervure de guidage (34) s'étendant dans la direction longitudinale de la patte (31) et les parois latérales (23) de la base (2) sont pourvues d'une rainure de guidage complémentaire (27), ladite nervure de guidage (34) à l'état monté étant reçue dans la rainure de guidage (27), ou, dans lequel les pattes (31) de l'attache (3) sont pourvues d'une rainure de guidage s'étendant dans la direction longitudinale de la patte (31) et les parois latérales (23) de la base (2) sont pourvues d'une nervure de guidage complémentaire qui, à l'état monté, est reçue dans la rainure de guidage.

8. Pince selon la revendication 7, dans lequel la nervure (34) ou la rainure (27) sur la patte (31) et la paroi latérale (23) sont agencées au milieu vu dans la direction axiale du tuyau ou du câble, et dans lequel les dents sur la patte (31) et la paroi latérale (23) sont disposées de part et d'autre de la rainure (27) ou de la nervure (34).

9. Pince selon l'une quelconque des revendications précédentes, dans lequel la base (2) ou la partie de serrage (32) de l'attache (3) présente une surface d'engagement concave (25) pour engager le tuyau ou le câble, laquelle présente un rayon de courbure constant.

10. Pince selon l'une quelconque des revendications précédentes, dans lequel la partie de serrage (32) de l'attache (3) ou la base présente une surface d'engagement concave (37) pour engager le tuyau ou le câble, laquelle partie d'engagement concave (37) présente une partie supérieure (37a) avec un rayon de courbure constant et deux parties extérieures (37b) qui se joignent à la partie supérieure, lesquelles présentent un rayon de courbure plus grand que la partie supérieure (37a).

11. Pince selon l'une des revendications 9 et 10, dans lequel le rayon de courbure des parties extérieures (37b) de la surface d'engagement de la partie de serrage ou de la base est sensiblement égal au rayon de courbure constant (R) de la surface d'engagement (25) de la base ou de la partie de serrage.

12. Pince selon l'une quelconque des revendications précédentes, dans lequel les dents ont un pas d'environ 1,5 mm.
